# EUROPÄISCHE PATENTSCHRIFT

(11) **EP 2 729 421 B1**
(45) Veröffentlichungstag und Bekanntmachung des Hinweises auf die Patenterteilung: **24.04.2019**
(21) Anmeldenummer: 12728247.3
(22) Anmeldetag: 14.06.2012
(51) Int. Cl.: C03B 23/207, A47J 41/02, B65B 7/16, C03B 23/13, B65B 1/02

(54) **FERTIGUNGSVERFAHREN FÜR EINEN GLASBEHÄLTER UND DAMIT HERGESTELTEM BEHÄLTER**
PREPARATION PROCESS FOR A GLASS CONTAINER AND ASSOCIATED CONTAINER
PROCÉDÉ DE PRÉPARATION D'UN RÉCIPIENT EN VERRE ET RÉCIPIENT ASSOCIÉ

(30) Priorität: 17.06.2011 DE 102011051143
(43) Veröffentlichungstag der Anmeldung: 14.05.2014
(73) Patentinhaber: Vitajuwel GmbH, 88175 Scheidegg (DE)
(72) Erfinder: EISEN, Ewald, 88175 Scheidegg i.Allgäu (DE)
(74) Vertreter: Zimmermann & Partner Patentanwälte mbB
(86) Internationale Anmeldenummer: PCT/EP2012/061367
(87) Internationale Veröffentlichungsnummer: WO 2012/172023

(56) Entgegenhaltungen:
- EP-A1- 0 461 699
- FR-A- 709 988
- JP-A- 59 128 224
- JP-A- 2003 034 542
- US-A1- 2004 007 280
- US-B1- 6 568 218

## Beschreibung

Die vorliegende Erfindung betrifft ein Verfahren zur Fertigung eines mit einem Fluid gefüllten geschlossenen Glasbehälters in Form eines Rührstabes, der zumindest einen Festkörper enthält. Aus JP 2003 034542 A ist eine Vorrichtung und ein Verfahren zur Versiegelung einer Glasampulle bekannt. Zur Herstellung der Ampulle selbst schweigt diese Druckschrift. Die Druckschrift US 2004/007280 beschreibt die Herstellung von Glasgefäßen mit einem nahe dem Boden angeordneten seitlichen Belüftungsloch ausgehend von einem einseitig verschlossenen Glasrohr. Das Gefäß bleibt stets offen. Die Druckschrift US 6 568 218 B1 beschreibt eine Vorrichtung zum Formen von beidseitig offenen Glasrohren für die Herstellung optischer Fasern. Die Druckschrift JP 59 128224 A lehrt die Herstellung einer Glaskugel für eine Glühbirne, wobei ein Stabrohr von einem gleichmäßig ausgeformten Lampenkolben abgetrennt wird. Die Druckschrift FR 709 988 A beschreibt ein Verfahren zum Verschließen von Glasampullen mit flüssigem Schwefelsäureanhydrid mittels Quetschung eines angeschmolzenen oberen Endes der Ampulle. Die Druckschrift EP 0 461 699 A1 beschreibt das Verschließen einer einseitig offenen Quarzglasröhre, in die ein komprimiertes Pulver eingebracht wurde, unter Beaufschlagung der Quarzglasröhre mit einem Unterdruck.

Der verfahrensgemäß vor diesem Hintergrund hergestellte Glasbehälter weist ein voluminöses Basalteil und ein daran angesetztes röhrenförmiges Segment geringeren Durchmessers auf. Dabei stehen das Basalteil und das röhrenförmige Segment miteinander in fluidischer Kommunikation. Die Verwendung des Glasbehälters als Rührstab sieht die Anordnung des zumindest einen Festkörpers und eines wesentlichen Teils des insgesamt im Glasbehälter befindlichen Fluids in besagtem verbreiterten Ende des Glasgefäßes vor, das heißt in dessen voluminösem Basalteil.

Aus dem im Basalteil frei beweglich angeordneten Festkörper sowie der angestrebten nahezu vollständigen Befüllung des Glasbehälters mit einem Fluid können sich Probleme für die Stabilität der Verbindung zwischen voluminösem Basalteils und dem daran angesetzten röhrenförmigen Segment geringeren Durchmessers ergeben, die eine besondere konstruktive Lösung erfordern. Andererseits ergeben sich fertigungstechnische Probleme.

Der Erfindung liegt die Aufgabe zu Grunde, ein Fertigungsverfahren für einen Glasbehälter in Form eines Rührstabes bereitzustellen.

Gemäß Anspruch 1 wird ein Fertigungsverfahren, gemäß Anspruch 9 ein Glasbehälter beschrieben, welche die vorstehend genannten Probleme lösen.

Nachfolgend wird die vorliegende Erfindung beispielhaft an Hand von Figuren erläutert. Dabei zeigt:
- Fig. 1: Arbeitsschritte zur Herstellung eines zu einem Ende hin verjüngten Rohres für den Aufbau eines Glasbehälters;
- Fig. 2: das Verbinden des verjüngten Rohres mit einem Stabrohr;
- Fig. 3: das Ausformen toroidförmiger Ringe am Stabrohr;
- Fig. 4: das Befüllen eines verjüngten Rohres mit Festkörpern;
- Fig. 5: das Verschließen einer mit Festkörpern befüllten Verjüngung;
- Fig. 6: das Befüllen der erhaltenen Phiole mit einer Flüssigkeit durch die Öffnung der Phiole (Stabrohr);
- Fig. 7: das Verschließen einer aufgeweiteten Ausformung an der Öffnung der Phiole;
- Fig. 8: die Ansicht eines Glasbehälters nach Fertigstellung;
- Fig. 9: das Halten eines Rührstabes mit der rechten Hand beim Aufnehmen des Stabes.

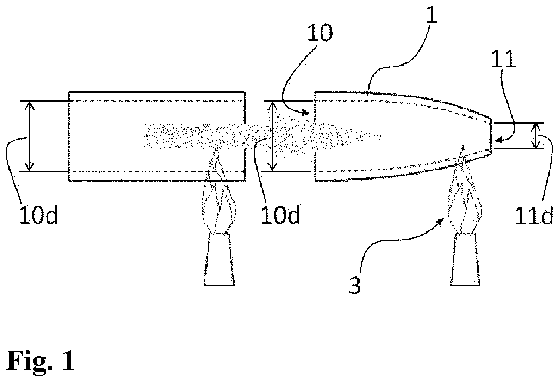

Die Fig. 1 zeigt schematisch, wie aus einem Stabrohr eines Innendurchmessers 10d ein einseitig verjüngtes Rohr 1 für den Aufbau eines Glasbehälters hergestellt werden kann. Das verjüngte Rohr 1 weist zwei Öffnungen unterschiedlicher lichter Weite bzw. unterschiedlicher Innendurchmesser d auf. Es wird auf die dem Fachmann geläufige Art und Weise aus einem Rohr gefertigt. Das einseitig an einem ersten Ende 11 verjüngte Rohr 1 weist an seiner Basis, bzw. seinem zweiten Ende eine Öffnung 10 auf und hat an dieser Basis eine zweite lichte Weite 10d, die größer ist, als die lichte Weite 11d am ersten Ende 11 des verjüngten Rohres 1.

Ein derartig einseitig verjüngtes Rohr 1 kann aus Glas oder aus transparentem Plastikmaterial gefertigt werden. Es wird auf die dem Fachmann bekannte Art und Weise hergestellt. Beispielsweise kann ein Glasrohr über der Flamme 3 eines geeigneten Brenners gleichmäßig angeschmolzen, ausgezogen, abgekühlt, geritzt und das verjüngte Ende abgesprengt werden. In einem anschließenden Arbeitsschritt wird der Bereich der so erhaltenen einseitigen Verjüngung vom restlichen, nicht verjüngten Glasrohr abgetrennt (vgl. grauer Pfeil in Fig. 1).

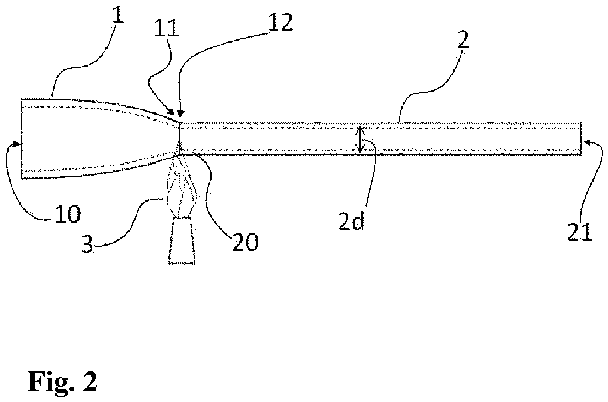

In einem anschließenden Verfahrensschritt wird das erhaltene, im wesentlichen die äußere Form eines Paraboloids aufweisende Rohr 1 einseitig an seinem ersten Ende 11 über der Flamme 3 eines geeigneten Brenners mit einem ersten Ende eines Stabrohres 2 verbunden (vgl. Fig. 2). Der Innendurchmesser 2d des Stabrohrs 2 gleicht oder ähnelt dem Innendurchmesser 11d des verjüngten Rohres 1. Auf diese Art und Weise entsteht ein Glasrohr das mehr oder weniger die typische Form eines Trichters aufweist. Dabei wird das dem oberen weiten Teil eines Trichters entsprechende offene Ende vom verjüngten Rohr 1 und der einer Tülle eines Trichters entsprechende engere Teil vom Stabrohr 2 gebildet.

Beide können transparent sein und aus dem gleichen oder aus ähnlichen Materialien bestehen. Ebenso können beide auch aus völlig unterschiedlichen Materialien bestehen. Beispielsweise können die Materialien eine unterschiedliche Oberflächenstruktur, einen unterschiedlichen Grad der Transparenz oder eine unterschiedliche Färbung aufweisen.

Typischerweise werden zur Fertigung des beschriebenen Glasbehälters 125 Mineralgläser verwendet. Es ist ein besonderer Vorteil der Verwendung von Mineralgläsern nach Art von Quarzglas oder Borosilikatglas, dass sowohl die innere als auch die äußere Oberfläche des erhaltenen Glasgefäßes 125 glatt und porenfrei ist und so ausgewählt werden kann, das die mit ihr in Kontakt tretende Flüssigkeit schlierenfrei abläuft.

Die beispielhafte Verwendung von Borosilikatglas oder Quarzglas für den hier beschriebenen Glasbehälter 125 beruht auf den chemischen und thermischen Eigenschaften von Borosilikatglas und Quarzglas sowie einer Vielzahl weiterer Vorteile, die Borosilikatglas und Quarzglas gegenüber anderen Gläsern auszeichnen. Hierzu zählen insbesondere Eigenschaften wie eine glatte, porenfreie Oberfläche; katalytische Indifferenz; physiologische Unbedenklichkeit; Geruchs- und Geschmacksneutralität; Unbrennbarkeit; Durchsichtigkeit.

Gemäß einer oder mehrerer Ausführungsformen wird am Glasrohr 2 selbst, zumindest an der Stelle seiner Verbindung 12 mit dem verjüngten Rohr 1, eine umlaufende ringförmige Erweiterung 22 ausgeformt. Der dabei gebildete toroidförmige Ring 22 verleiht der Verbindung 12 zwischen der kleineren ersten Öffnung 11 des verjüngten Rohres 1 mit dem ersten Ende des Stabrohres 2 größere Festigkeit und Stabilität. Eine zweite ringförmige Erweiterung gleicher Größe und Form oder ähnlicher Größe und Form kann in der Nähe des zweiten Endes 21 des Stabrohres 2 ausgeformt werden.

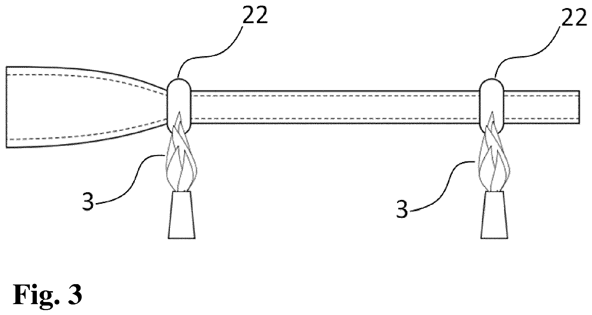

Die Ausformung der toroidförmigen Ringe 22 erfolgt beispielsweise durch gleichmäßiges Anschmelzen der entsprechenden Rohr-Abschnitte, Stauchen und Beaufschlagen mit Innendruck, so wie beispielsweise vom Glasblasen bekannt (vgl. Fig. 3). Auf diese Art und Weise entsteht ein Glasrohr, das mehr oder weniger die typische Form eines Trichters aufweist und dessen vom Stabrohr 2 gebildete Tülle an ihrem unteren Ende unter Bildung eines umlaufenden toroidförmigen Rings 22 gestaucht wurde.

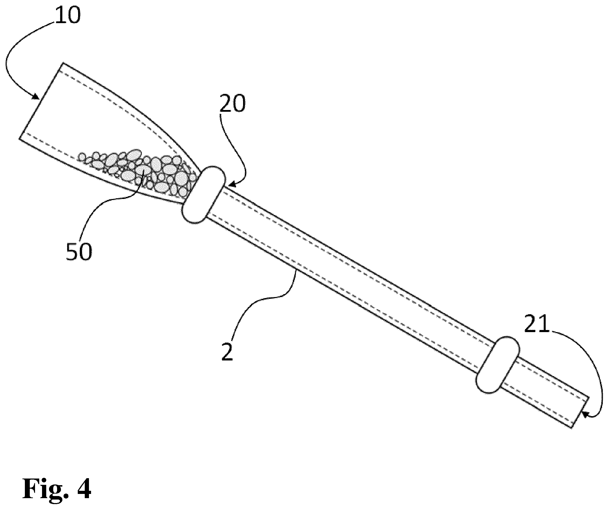

In einem nächsten Schritt wird das mit seiner kleineren ersten Öffnung 11 bündig am Glasrohr 2 mit toroidförmigem Ring 22 angesetzte und sich verjüngende Rohr 1 mit zumindest einem Festkörper 50 bestückt. Dazu wird der jeweilige Festkörper 50 von der zweiten Öffnung 10 des Glasrohres 1 her eingebracht. Nach einer beispielhaften Ausführungsform wird das verjüngte Rohr 1 etwa bis zu einem Drittel mit einer Vielzahl von Festkörpern 50 gefüllt. Dazu wird das annähernd trichterförmige Rohr aufrecht oder zumindest schräg gehalten und der Festkörper 50 in dessen oberen Teil, bzw. in das verjüngte Rohr eingelegt. Der mittlere Durchmesser der typischerweise verwendeten Festkörper 50 liegt oberhalb der Größe des inneren Durchmessers 11d der ersten Öffnung des verjüngten Rohres, bzw. oberhalb des Innendurchmessers 2d des Stabrohres 2. Auf diese Art und Weise ist sichergestellt, dass sich der vom verjüngten Rohr 1 gebildete Becher gut bis zur gewünschten Höhe mit den eingebrachten Festkörpern 50 füllen lässt (vgl. Fig. 4).

Wahlweise kann auch nur ein einzelner Festkörper 50, beispielsweise ein Kristall, ein Mineralstück oder ein Mineralsplitter oder ein Edelstein oder ein Halbedelstein in das sich verjüngende Rohr 1 eingebracht werden.

Gemäß einer oder mehrerer Ausführungsformen kann der zumindest eine Festkörper 50 der in den Glasbehälter eingebracht wird ausgewählt sein unter: Achat, Amazonit, Aquamarin, Aventurin, Bergkristall, Calcit, Chalzedon, Diamant, Granat, Halit-Salz, Jaspis, Lapislazuli, Magnesit, Milchopal, Moosachat, Opal, Orangencalcit engl.: orange calcit, Ozean Jaspis, Pistazienopal, Quarz, Rohdiamant, Rosenquarz, Rotem Jaspis, Rutilquarz, Smaragd, Sodalith und versteinertem Holz.

Gemäß weiteren beispielhaften Ausführungsformen können mehrere Festkörper 50 nach Art eines Minerals, nach Art von Mineralstücken oder -Splittern und/oder Edelsteine oder Edelsteinstücke oder -Splitter in roher und/oder teilweise und/oder vollständig geschliffener und/oder teilweise und/oder vollständig polierter Form miteinander in einen Glasbehälter eingebracht werden.

Typische Kombinationen betreffen Kombinationen nachfolgender Materialien: Pistazienopal, Bergkristall; oder Amethyst, Chalcedon, Ozean Jaspis, versteinertes Holz, Rosenquarz; oder Rohdiamant, Bergkristall; oder Granat, Bergkristall; oder Roter Jaspis, Magnesit, Bergkristall; oder Rosenquarz, Amethyst, Aventurin; oder Milchopal, Chalcedon, Moosachat; oder Aquamarin, Bergkristall; oder Lapislazuli, Rutilquarz; oder Roter Jaspis, Sodalith, Orangencalcit, Achat braun, Aventurin; oder Bergkristall, Granat, Amethyst; oder Smaragd, Bergkristall; oder Orangencalcit, Bergkristall; oder Amethyst, Bergkristall; oder Sodalith, Bergkristall; oder Rosenquarz, Amethyst, Bergkristall.

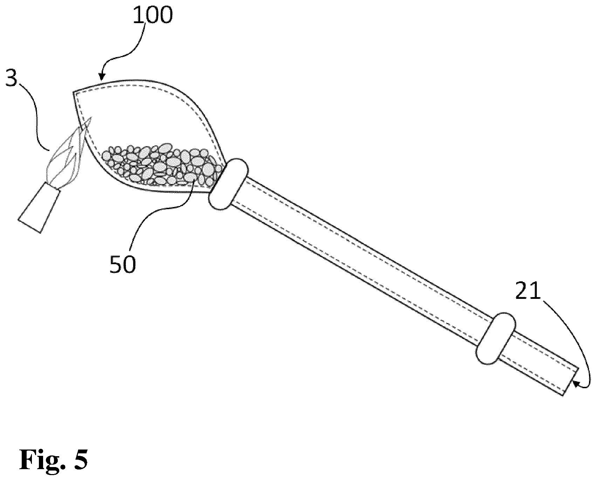

Nun kann der obere Rand des verjüngten Rohres 1 durch sorgfältiges Anschmelzen verjüngt und die weite Öffnung 10 des Rohres 1 so allmählich verschlossen werden. Dazu wird der obere Teil des verjüngten Rohres 1 an und unterhalb seiner zweiten Öffnung 10 gleichmäßig angeschmolzen, einwärts gedrückt und unter ständiger Rotation über der Flamme 3 eines geeignet eingestellten Brenners geschlossen (vgl. Fig. 5) und dabei geglättet. Auf die detaillierte Beschreibung der dem Fachmann bekannten Einzelheiten wird hier verzichtet.

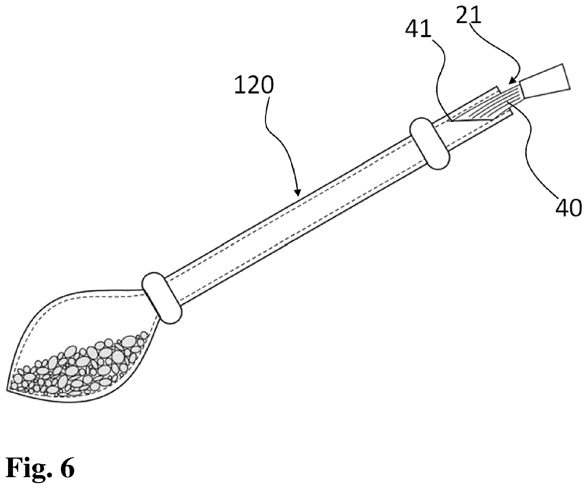

Nach dem Abkühlen wird die so aus dem verjüngten Rohr und dem Stabrohr erhaltene Phiole 120 mit einem Fluid 40 befüllt (vgl. Fig. 6). Als das im Glasbehälter eingebrachte Fluid 40 kann ein jegliches, im Wesentlichen transparentes Fluid Verwendung finden, das mit dem zumindest einen Festkörper nicht chemisch reagiert. Beispielhafte Fluide 40 sind entweder reine Flüssigkeiten bzw. Lösungsmittel wie z.B. Wasser, wässrige Lösungen, insbesondere gesättigte Salzlösungen und/oder kolloidale Lösungen, Sole oder Gele, ionische Flüssigkeiten, bei Raumtemperatur flüssige Salze und/oder Salzschmelzen. Weitere beispielhafte Fluide können ausgewählt werden unter: organische Flüssigkeiten, insbesondere Alkohole, Polyole, Silikone, Silikonöle sowie jegliche flüssige Polymere oder Polymerlösungen, Mineralöle oder/und Gase und deren Mischungen.

Vorteilhafterweise ist das Fluid 40 so ausgewählt, dass auch keine chemische Reaktion zwischen den eingebrachten Festkörpern 50 untereinander oder mit dem Fluid oder darin ggf. zusätzlich gelösten Substanzen erfolgt. Ein Vorteil dieser Auswahl besteht darin, dass das im Glasbehälter eingebrachte Fluid transparent bleibt und sich auch bei längerer Belichtung nicht verfärbt. Weiterhin werden durch die wie beschrieben erfolgende Auswahl des Fluids 40 am Festkörper 50 ausgebildete Feinstrukturen, beispielsweise Schliffflächen oder polierte Flächen und Facetten nicht verändert.

Vorteilhafterweise verleiht ein toroidförmiger Ring 22 am Stoß 12 zwischen den einander entsprechenden Öffnungen 11 und 20 der Verbindung zwischen dem verjüngten Rohr 1 und dem Stabrohr 2 eine größere Stabilität, als sie ohne diesen toroidförmigen Ring 22 erhältlich wäre. Der fertiggestellte Glasbehälter 125 weist einseitig, an seinem im Gebrauch unteren bauchigen Ende eine wesentlich größere Masse auf, als an seinem, im Gebrauch oberen, stabförmigen Ende. Die Ausformung des stabförmigen Rohres 2 am Übergang zwischen stabförmigem Rohr 2 und dem bauchigem, aus dem verjüngten Rohr 1 gebildeten, Ende erwies sich als stabilisierend und beugt beim bestimmungsgemäßen Gebrauch des Glasbehälters 125 einem Bruch der Fügeverbindung am Stoß 12 und in dessen Nähe vor.

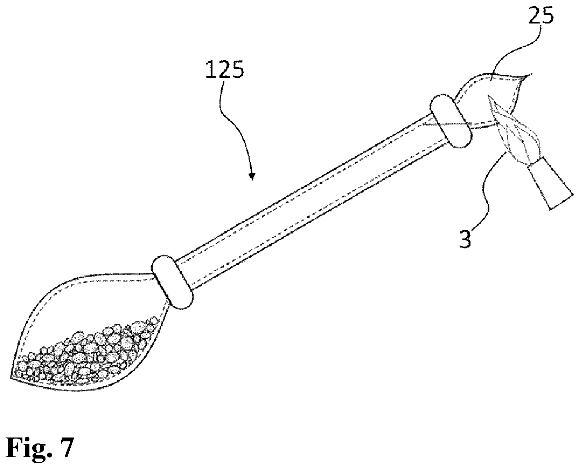

In einem nächsten Schritt wird oberhalb eines zweiten toroidartigen Ringes 22 vor dem verbliebenen offenen Ende 21 der Phiole 120 das zunächst noch gerade zweite Ende 21 des Stabrohres 2 aufgeweitet. Beispielsweise kann bei Verwendung von Glas die erneut betriebene allmähliche Verjüngung der Aufweitung 25 über der Flamme 3 eines geeignet eingestellten Brenners 3 zum Verschließen der Phiole 120 mit einem kugel- oder tropfenförmigen Verschluss 25 genutzt werden (vgl. Fig. 7).

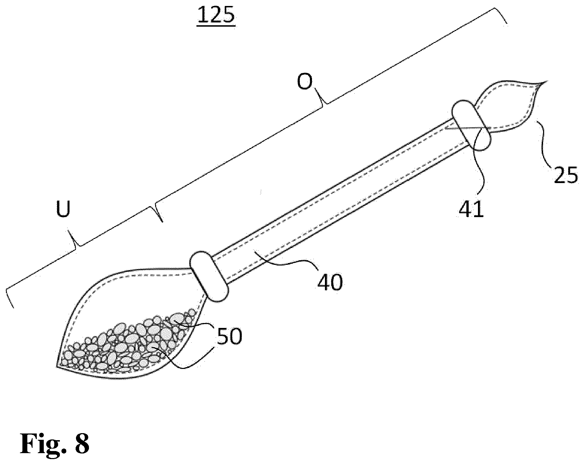

Die Fig. 8 zeigt einen auf die vorstehend beschriebene Art und Weise erhaltenen und fluidisch dichtend verschlossenen Glasbehälter 125 einer im Wesentlichen gestreckten Form. Der Glasbehälter 125 weist einen gewölbten unteren Behälterteil U mit zumindest einem Festkörper 50 und einen geraden, mit einer kleineren Verdickung 25 versehenen oberen Teil O auf und ist nahezu vollständig mit einer Flüssigkeit 40 gefüllt.

Die Position des Meniskus 41 des zur Füllung des Glasbehälters verwendeten Fluids 40 liegt bei einer im Wesentlichen aufrechten Position des Glasbehälters 125 typischerweise im Bereich des oberen Teils O des Glasbehälters 125. Dabei wird unter einer im Wesentlichen aufrechten Position die räumliche Orientierung des Glasbehälters verstanden, bei der sich der untere Teil U unterhalb einer gedachten horizontalen Ebene und der obere Teil O oberhalb dieser gedachten horizontalen Ebene befindet. Eine solche, im Wesentlichen aufrechte Position ergibt sich unter terrestrischen Bedingungen beispielsweise, wenn der obere Teil O des Glasbehälters 125 drehbar an seinem oberen Ende O befestigt ist oder gehalten wird.

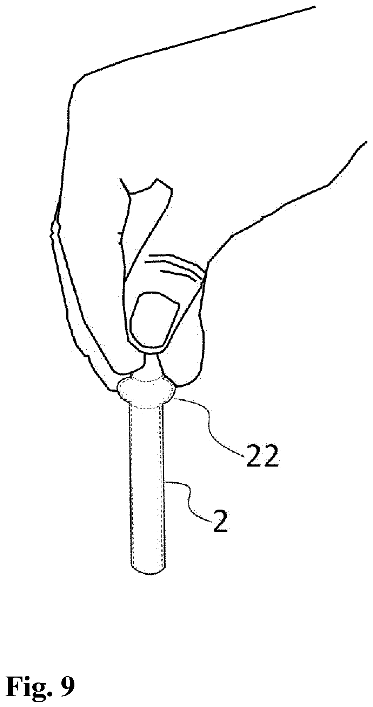

Der toroidförmige Ring im oberen Teil O des Glasbehälters 125 bietet beim Greifen und beim Halten des Glasbehälters 125 mit der Hand den Vorteil, im Zusammenwirken der Finger der greifenden bzw. haltenden Hand mit dem Verschluss 25 und dem dazu benachbarten Ring 22, eine gute Grifffestigkeit zu gewährleisten (vgl. Fig. 9).

Vorteile der vorstehend beschriebenen Kombination einzelner Verfahrensschritte bestehen in der Bereitstellung eines Glasbehälters 125 der einerseits leicht in einer geeigneten Halterung zu befestigen ist und/oder leicht zu halten ist und sich daher gut für die bestimmungsgemäße Verwendung als Rührstab eignet. Andererseits widersteht der wie beschrieben gefertigte Rührstab den bei bestimmungsgemäßem Gebrauch auftretenden Scherbelastungen, insbesondere an der Verbindung des Basalteils U des Glasgefäßes 125 mit dem daran angesetzten röhrenförmigen stabförmigen oberen Segment O. Das Glasgefäß 125 ist insbesondere an und in der Nähe der toroidförmigen ringförmigen Aufweitungen 22 des Stabrohres 2 stabil und zeigt eine verminderte Bruchneigung gegenüber der herkömmlichen direkten Verbindung eines Stabrohres ohne toroidförmigen Ring 22.

Ein besonderer Vorteil der Anordnung eines toroidförmigen Ringes 22 unmittelbar vor der kaudalen Aufweitung 25 des oberen Teils O des Glasgefäßes 125 besteht in der Ausbildung eines Eingriffs. Dieser Eingriff bietet einen sicheren Halt oder erlaubt eine zuverlässige Befestigung des Glasgefäßes in einer geeigneten Haltevorrichtung. Weiterhin können durch die zwischen dem toroidförmigem Ring 22 und der kaudalen Aufweitung 25 des Stabrohres 2 im oberen Teil O des Gefäßes 125 gebildete Einschnürung zuverlässig weitere Elemente beweglich befestigt werden. Beispiele dafür sind die dauerhafte aber axial bewegliche Befestigung einer Öse, eines Ringes oder einer Schlaufe oder Schlinge. Das gestattet die Ausstattung derartiger Glasgefäße beispielsweise mit individuellen Markierungen.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Fertigungsverfahren für einen geschlossenen Glasbehälter (125) enthaltend zumindest einen Festkörper (50) und ein Fluid (40), umfassend die Schritte:
- Bereitstellen eines zu einem ersten Ende hin verjüngten Rohres (1), dessen lichte Weite (11d) an dem verjüngten ersten Ende (11) geringer ist, als eine lichte Weite (10d) an einem gegenüberliegenden zweiten Ende (10);
- Verbinden des Rohres (1) am verjüngten ersten Ende (11) mit einem ersten Ende (20) eines geraden Stabrohres (2);
- Einbringen eines Festkörpers (50) in das verjüngte Rohr (1) vom zweiten Ende (10) des verjüngten Rohres (1) her, wobei ein mittlerer Durchmesser des Festkörpers (50) oberhalb eines Innendurchmessers (2d) des Stabrohres (2) liegt;
- Verschließen des verjüngten Rohres (1) an dem die größere lichte Weite (10d) aufweisenden zweiten Ende (10);
- Befüllen der so erhaltenen Phiole (120) mit einem Fluid (40);
- Verschließen der Phiole (120) am zweiten Ende (21) des Stabrohres (2).

2. Verfahren nach Anspruch 1, weiterhin umfassend den Schritt:
- Ausformen zumindest eines toroidförmigen Ringes (22) am Stabrohr (2);

3. Verfahren nach einem der Ansprüche 1 oder 2, weiterhin umfassend den Schritt
- Anordnen eines toroidförmigen Ringes (22) an der Verbindungsstelle (12) des Stabrohres (2) mit dem verjüngten ersten Ende (11) des verjüngten Rohres (1).

4. Verfahren nach Anspruch 1 bis 3, weiterhin umfassend die Schritte
- Ausbilden einer Aufweitung (25) am zweiten Ende (21) des Stabrohres (2); und
- fluidisch dichtendes Verschließen der der Phiole (120) durch Verschließen der Aufweitung (25).

5. Verfahren nach einem der Ansprüche 1 bis 4, weiterhin umfassend:
- Auswählen des zumindest einen Festkörpers (50) unter:
Achat, Amazonit, Aquamarin, Aventurin, Bergkristall, Calcit, Chalzedon, Diamant, Granat, Halit-Salz, Jaspis, Lapislazuli, Magnesit, Milchopal, Moosachat, Opal, Orangencalcit (engl.: orange calcit), Ozean Jaspis, Pistazienopal, Quarz, Rohdiamant, Rosenquarz, Rotem Jaspis, Rutilquarz, Smaragd, Sodalith und versteinertem Holz.

6. Verfahren nach einem der Ansprüche 1 bis 5, wobei der zum Einbringen verwendete Festkörper (50) Kombinationen unterschiedlicher Festkörper (50) umfasst, ausgewählt unter den Kombinationen: Pistazienopal, Bergkristall; oder Amethyst, Chalcedon, Ozean Jaspis, versteinertes Holz, Rosenquarz; oder Rohdiamant, Bergkristall; oder Granat, Bergkristall; oder Roter Jaspis, Magnesit, Bergkristall; oder Rosenquarz, Amethyst, Aventurin; oder Milchopal, Chalcedon, Moosachat; oder Aquamarin, Bergkristall; oder Lapislazuli, Rutilquarz; oder Roter Jaspis, Sodalith, Orangencalcit, brauner Achat, Aventurin; oder Bergkristall, Granat, Amethyst; oder Smaragd, Bergkristall; oder Orangencalcit, Bergkristall; oder Amethyst, Bergkristall; oder Sodalith, Bergkristall; oder Rosenquarz, Amethyst, Bergkristall.

7. Verfahren nach einem der Ansprüche 1 bis 6, wobei das zum Befüllen verwendete Fluid (40) ausgewählt ist unter: Wasser, ionischen Flüssigkeiten, gesättigten Salzlösungen, organischen Flüssigkeiten, Mineralölen, Silikonen, Silikonölen, Alkoholen, Polymeren, Ketonen, Gasen und/oder deren Mischungen.

8. Verfahren nach einem der Ansprüche 1 bis 6, wobei das Befüllen mit einem Fluid (40) erfolgt, das physiologisch isotonisch ist.

9. Geschlossener Glasbehälter (125), hergestellt gemäß einem der vorstehenden Verfahren gemäß der Ansprüche 1 bis 8.

10. Geschlossener Glasbehälter (125) gemäß Anspruch 9, wobei dass Fluid (40) ausgewählt ist, sodass keine chemische Reaktion zwischen den Festkörpern (50) untereinander oder mit dem Fluid (40) oder darin gelösten Substanzen erfolgt.

## Claims

1. Method for manufacturing a closed glass container (125) comprising at least one solid body (50) and a fluid (40), comprising the steps of:
- providing a tube (1) tapering towards a first end, having an inside diameter (11d) at the tapered first end (11) which is less than an inside diameter (10d) at an opposite second end (10);
- connecting the tube (1) at the tapered first end (11) to a first end (20) of a straight rod tube (2);
- inserting a solid body (50) into the tapered tube (1) from the second end (10) of the tapered tube (1), wherein an average diameter of the solid body (50) is above an inner diameter (2d) of the rod tube (2);
- sealing the tapered tube (1) at the second end (10) having the larger inside diameter (10d);
- filling the vial (120) thereby obtained with a fluid (40);
- sealing the vial (120) at the second end (21) of the rod tube (2).

2. Method according to claim 1, further comprising the step:
- forming at least one toroidal ring (22) at the rod tube (2);

3. Method according to any of claims 1 or 2 further comprising the step of
- arranging of a toroidal ring (22) at the connection point (12) of the rod tube (2) with the tapered first end (11) of the tapered pipe (1).

4. Method according to claims 1 to 3, further comprising the steps of
- forming an widening (25) at the second end (21) of the rod tube (2); and
- fluid sealing of the vial (120) by sealing the expansion (25).

5. Method according to any of claims 1 to 4, further comprising:
selecting said at least one solid (50) from: agate, amazonite, aquamarine, aventurine, rock crystal, calcite, chalcedony, diamond, garnet, halite salt, jasper, lapis lazuli, magnesite, milk opal, moss agate, opal, orange calcite, ocean jasper, pistachio opal, quartz, rough diamond, rose quartz, red jasper, rutile quartz, emerald, sodalite and petrified wood.

6. Method according to any one of Claims 1 to 5, wherein the solid (50) used for insertion comprises combinations of different solid (50) selected from the combinations: pistachio opal, rock crystal; or amethyst, chalcedony, ocean jasper, petrified wood, rose quartz; or rough diamond, rock crystal; or garnet, rock crystal; or red jasper, magnesite, rock crystal; or rose quartz, amethyst, aventurine; or milk opal, chalcedony, moss agate; or aquamarine, rock crystal; or lapis lazuli, rutile quartz; or red jasper, sodalite, orange calcite, brown agate, aventurine; or rock crystal, garnet, amethyst; or emerald, rock crystal; or orange calcite, rock crystal; or amethyst, rock crystal; or sodalite, rock crystal; or rose quartz, amethyst, rock crystal.

7. Method according to any one of claims 1 to 6, wherein the fluid (40) used for filling is selected from: water, ionic liquids, saturated salt solutions, organic liquids, mineral oils, silicones, silicone oils, alcohols, polymers, ketones, gases and/or mixtures thereof.

8. Method according to any one of claims 1 to 6, wherein the filling is carried out with a fluid (40) which is physiologically isotonic.

9. A closed glass container (125) made by one of the above methods according to claims 1 to 8.

10. Closed glass container (125) according to claim 9, wherein the fluid (40) is selected so that there is no chemical reaction between the solids (50) among themselves or with the fluid (40) or substances dissolved therein.

## Revendications

1. Procédé de fabrication pour un récipient en verre fermé (125) contenant au moins un corps solide (50) et un fluide (40), comprenant les étapes :
- fourniture d'un tube (1) rétréci en direction d'une première extrémité, dont la largeur intérieure (11d) au niveau de la première extrémité (11) rétrécie est inférieure à une largeur intérieure (10d) au niveau d'une seconde extrémité (10) opposée ;
- liaison du tube (1) au niveau de la première extrémité (11) rétrécie avec une première extrémité (20) d'un tube en forme de barreau (2) rectiligne ;
- introduction d'un corps solide (50) dans le tube rétréci (1) depuis la seconde extrémité (10) du tube rétréci (1), où un diamètre moyen du corps solide (50) est situé au-dessus d'un diamètre interne (2d) du tube en forme de barreau (2) ;
- fermeture du tube rétréci (1) au niveau de la seconde extrémité (10) présentant la plus grande largeur intérieure (10d) ;
- remplissage de la fiole (120) ainsi obtenue avec un fluide (40) ;
- fermeture de la fiole (120) au niveau de la seconde extrémité (21) du tube en forme de barreau (2).

2. Procédé selon la revendication 1, comprenant en outre l'étape :
- formation d'au moins un anneau en forme de tore (22) sur le tube en forme de barreau (2).

3. Procédé selon l'une des revendications 1 ou 2, comprenant en outre l'étape
- agencement d'un anneau en forme de tore (22) au niveau du site de liaison (12) du tube en forme de barreau (2) avec la première extrémité (11) rétrécie du tube rétréci (1).

4. Procédé selon les revendications 1 à 3, comprenant en outre les étapes
- formation d'un élargissement (25) au niveau de la seconde extrémité (21) du tube en forme de barreau (2) ; et
- fermeture étanche aux fluides de la fiole (120) par fermeture de l'élargissement (25).

5. Procédé selon l'une des revendications 1 à 4, comprenant en outre :
- le choix du au moins un corps solide (50) parmi :
l'agate, l'amazonite, l'aigue-marine, l'aventurine, le cristal de roche, la calcite, la calcédoine, le diamant, le grenat, le sel gemme, le jaspe, le lapis-lazuli, la magnésite, l'opale laiteuse, l'agate mousseuse, l'opale, la calcite orange (anglais : orange calcit), le jaspe océan, l'opale pistache, le quartz, le diamant brut, le quartz rose, le jaspe rouge, le quartz rutile, l'émeraude, la sodalite et le bois pétrifié.

6. Procédé selon l'une des revendications 1 à 5, où le corps solide (50) utilisé pour l'introduction comprend des combinaisons de différents corps solides (50), choisies parmi les combinaisons : opale pistache, cristal de roche ; ou améthyste, calcédoine, jaspe océan, bois pétrifié, quartz rose ; ou diamant brut, cristal de roche ; ou grenat, cristal de roche ; ou jaspe rouge, magnésite, cristal de roche ; ou quartz rose, améthyste, aventurine ; ou opale laiteuse, calcédoine, agate mousseuse ; ou aigue-marine, cristal de roche ; ou lapis-lazuli, quartz rutile ; ou jaspe rouge, sodalite, calcite orange, agate brune, aventurine ; ou cristal de roche, grenat, améthyste ; ou émeraude, cristal de roche ; ou calcite orange, cristal de roche ; ou améthyste, cristal de roche ; ou sodalite, cristal de roche ; ou quartz rose, améthyste, cristal de roche.

7. Procédé selon l'une des revendications 1 à 6, où le fluide (40) utilisé pour le remplissage est choisi parmi : l'eau, les liquides ioniques, les solutions salées saturées, les liquides organiques, les huiles minérales, les silicones, les huiles de silicone, les alcools, les polymères, les cétones, les gaz et/ou leurs mélanges.

8. Procédé selon l'une des revendications 1 à 6, où le remplissage a lieu avec un fluide (40) qui est physiologiquement isotonique.

9. Récipient en verre fermé (125), produit selon l'un des procédés précédents selon les revendications 1 à 8.

10. Récipient en verre fermé (125) selon la revendication 9, où le fluide (40) est choisi de telle sorte qu'aucune réaction chimique ne se produit entre les corps solides (50) entre eux ou avec le fluide (40) ou les substances dissoutes dans celui-ci.
